# EUROPÄISCHE PATENTSCHRIFT

(11) **EP 2 625 260 B1**
(45) Veröffentlichungstag und Bekanntmachung des Hinweises auf die Patenterteilung: **17.12.2014**
(21) Anmeldenummer: 11766890.5
(22) Anmeldetag: 04.10.2011
(51) Int. Cl.: C12C 7/04, C12C 7/22, F28F 13/12, F28D 3/04, F28D 21/00, C12C 7/06, C12C 13/00, C12C 13/02, F28D 1/06, F28D 3/00

(54) **VERFAHREN UND VORRICHTUNG INSBESONDERE ZUM MAISCHEN BEI DER HERSTELLUNG VON BIER**
METHOD AND DEVICE, IN PARTICULAR FOR MASHING IN THE PRODUCTION OF BEER
PROCÉDÉ ET DISPOSITIF PERMETTANT NOTAMMENT L'EMPÂTAGE LORS DE LA FABRICATION DE BIÈRE

(30) Priorität: 04.10.2010 DE 102010041956
(43) Veröffentlichungstag der Anmeldung: 14.08.2013
(73) Patentinhaber: Krones AG, 93073 Neutraubling (DE)
(72) Erfinder: KAMMERLOHER, Helmut, 85354 Freising (DE)
(74) Vertreter: Grünecker, Kinkeldey, Stockmair & Schwanhäusser
(86) Internationale Anmeldenummer: PCT/EP2011/004945
(87) Internationale Veröffentlichungsnummer: WO 2012/045440

(56) Entgegenhaltungen:
- WO-A1-02/12433
- DE-A1-102008 056 744
- DE-C1- 19 828 686
- US-A1- 2009 207 689

## Beschreibung

Die Erfindung betrifft ein Verfahren zum Maischen bei der Herstellung von Bier sowie eine Vorrichtung zum Durchführen des Verfahrens.

Die WO 02/12433 A1 beschreibt ein Gefäß für die Bierherstellung, das zum Maischen und Würzekochen verwendet werden kann. Dabei wird die Maische über eine geneigte Heizfläche geleitet und fließt in eine Rinne.

Die DE 10 2008 744 A1 beschreibt bereits eine Vorrichtung und ein Verfahren zum Strippen von Würze, wobei über eine Verteilereinrichtung Würze auf eine Heizeinrichtung geleitet wird und an dieser herablaufen kann. Es wird auch ein Ausführungsbeispiel beschrieben, bei dem eine entsprechende Vorrichtung zum Maischen verwendet werden soll. Dann wird die Maische nicht über eine Verteilereinrichtung eingebracht, sondern über einen gesonderten Zulauf.

Die Druckschrift DE 198 28 686 C1 beschreibt eine Vorrichtung, bei der zu erwärmendes Medium ausschließlich über eine beheizte Fläche in der Mitte des Behälters geleitet wird.

Die US 2009/0207689 A1 beschreibt einen Reaktor zum Erwärmen eines Fluids, betrifft jedoch keine Maischvorrichtung. Der Behälter weist einen Zulaufstutzen auf, der als Träger für Zusatzteile dient oder aber als Verbindungsstutzen für eine Produktzuführung.

Ein wichtiger Prozessschritt zur Herstellung von Bier ist das Maischen. Beim Maischen werden Schrot und Wasser miteinander vermischt und dabei die Inhaltsstoffe des Malzes in Lösung gebracht. Zur Herstellung von Würze mit einer hohen Konzentration (high - gravity-Verfahren) kommen hochviskose Maischen, sog. Dickmaischen zum Einsatz. Derzeit ist die Maischearbeit im Maischebottich ab einer Konzentration, die eine 22%ige Vorderwürze ergibt (ohne Enzyme) bzw. eine 24%ige Vorderwürze ergibt (mit Enzymen), oft nur eingeschränkt möglich. Dies kann sich auch auf alle folgenden Prozesse negativ auswirken, die dann entweder nur noch eingeschränkt oder aber überhaupt nicht mehr funktionieren.

Ein Grund hierfür ist beispielsweise die viskositätsbedingte Erniedrigung des Wärmeübergangskoeffizienten. Für einen hohen Wärmestrom ist aber ein hoher Wärmedurchgangskoeffizient oder eine größere Heizfläche nötig, welche aber nur schwer zu beeinflussen bzw. limitiert sind. Mit einer erhöhten Heizmitteltemperatur könnte zwar der Wärmestrom auch erhöht werden, aber hierdurch erhöht sich auch die Grenzschichttemperatur, wodurch u. a. die Enzyme geschädigt werden. Außerdem können auch das Fouling und die temperaturbedingten Verluste stark zunehmen wodurch der Primärenergiebedarf steigt. Ebenfalls erhöht sich der Reinigungsaufwand.

Ein weiterer Grund ist die verringerte Enzymaktivität. In der Dickmaische können z.B. Gaseinschlüsse länger verweilen und damit eine Art Barriere zwischen Enzymen und Substrat bilden. Zusätzlich behindert die erhöhte Viskosität der Maische die Beweglichkeit und Arbeit der Enzyme, so dass die vorgegebenen Rasten oft nicht mehr zum gewünschten Resultat führen.

Ein dritter Grund kann eine inhomogene Maische sein, die sich z.B. infolge gasbedingter Dichteunterschiede und der daraus resultierenden Entmischung der Maische ergibt. Hierbei streben die gasbehafteten und leichteren Maischeteilchen stärker an die Spiegeloberfläche, was durch den bodennahen Einbauort von Rührwerken oft nicht ausreichend verhindert werden kann. Diese Maischeteilchen befinden sich dann unter Umständen weniger lang im Temperaturoptimum der Enzyme was zum Beispiel zu Extraktverlusten führen kann.

Hiervon ausgehend liegt der vorliegenden Erfindung die Aufgabe zugrunde, ein verbessertes Verfahren zum Maischen und eine entsprechende Vorrichtung, insbesondere für Dickmaischen, bereitzustellen, die ein schonendes und energiesparendes Aufheizen der Maische ermöglichen.

Erfindungsgemäß wird diese Aufgabe durch die Merkmale der Ansprüche 1 und 8 gelöst.

Bevorzugte Ausführungsbeispiele ergeben sich aus den Unteransprüchen.

Gemäß der vorliegenden Erfindung erstreckt sich nun die Heizfläche über die Spiegeloberfläche der Maische nach oben, derart, dass Maische über die Heizfläche bis zur Spiegeloberfläche der Maische herablaufen kann. Die volumenunabhängige Heizflächenvergrößerung reduziert somit die Problematik der viskositätsbedingten Erniedrigung des Wärmeübergangs bei höher konzentrierten Maischen und während der Verkleisterungsphase.

Dadurch, dass die Maische in einem dünnen Film über die Heizfläche nach unten fließt, können sich die oberflächennahen Gasblasen aufgrund der Temperaturerhöhung schlagartig bzw. sehr schnell vergrößern und ausgetrieben werden. Durch das Entgasen der Maische können z. B. gasbedingte Dichtunterschiede der Maische wesentlich reduziert werden und die Enzymaktivität wie oben beschrieben bei Dickmaischen erhöht werden. Dadurch, dass die Maische über die Heizfläche geleitet wird, können auch weitere unerwünschte flüchtige Substanzen, wie beispielsweise Dimethylsulfid (DMS), schon aus der Maische ausgetrieben werden. DMS ist eine schwefelhaltige, organische Verbindung, die einen Fehlgeschmack im Bier verursacht. DMS entsteht aus den beim Mälzen gebildeten Vorläufern S-Methylmethionin (SMM) und Dimethylsulfoxid (DMSO).

Dadurch, dass die Maische zusätzlich erwärmt wird, indem sie über die Heizfläche geleitet wird, kann die Temperatur des Heizmediums reduziert werden. Somit ist ein schonenderes Aufheizen der Maische möglich. Dadurch, dass keine hohen Heizmediumtemperaturen notwendig sind, kann beispielsweise auch Wärmeenergie aus einer Wärmerückgewinnung verwendet werden, d.h. dass Abwärme anderer Prozessschritte (z.B. Warmwasser, das bei der Würzekühlung entsteht) sinnvoll zum Erwärmen des Heizmediums und somit zum Heizen der Maische verwendet werden kann, so dass der Einsatz von Primärenergie zum Aufheizen der Maische verhindert oder zumindest wesentlich reduziert werden kann. Die reduzierte Heizmedientemperatur, sowie der mögliche Einsatz von hochkonzentrierten Maischen bringt somit eine wesentliche Energieeinsparung mit sich. Durch die Verwendung von Heizmedium aus Wärmerückgewinnung kann die Heizflächenwandung kostengünstiger angefertigt werden. Durch z.B. eine dünnere Heizflächenwandung kann wiederum der Wärmedurchgang verbessert werden.

Ein weiterer Vorteil ist, dass sich aufgrund der neuartigen Maischeführung eine verbesserte Gesamtdurchmischung ergibt, insbesondere auch bei großen Bottichdurchmessern und hohen Füllständen.

Durch die Aufbringung der Maische auf die Heizfläche, die sich oberhalb der Spiegeloberfläche erstreckt, erhöht sich der Volumenstrom an der Maischeoberfläche insbesondere bei hohen Füllständen, was wiederum den manchmal entstehenden, dichtebedingten Maischeteppich an der Spiegeloberfläche reduziert und somit wiederum eine bessere Enzymtätigkeit und Umsetzung der Stärke in der Maische zur Folge hat.

Ein weiterer Vorteil liegt darin, dass die Maische unabhängig von der Maischemenge von ein und derselben Vorrichtung optimal aufgeheizt werden kann. Man braucht keine spezifischen und biersortenabhängige Unterteilungen mehr für die Heizzarge, was deutlich Kosten und Klärungsaufwand bei der Konstruktion erspart. Auch neue Sorten mit stark variierenden Maischemengen können mit diesem System gut aufgeheizt werden (große Flexibilitätserhöhung für die Brauerei). Selbst "Mikro"-Teilmaischemengen und/oder "Mikro"-Maischemengen können zuverlässig und gleichmäßig aufgeheizt werden. Für solche Fälle wäre dann kein zusätzlicher Heizboden mehr nötig, da die "Mikro"- Teilmaischemengen und/oder "Mikro"-Maischemengen erwärmt werden, indem sie über die Heizfläche herablaufen.

Außerdem ermöglicht diese Verfahrensweise den Bau von schlankeren und günstigeren Maischegefäßen (mit Füllständen von z.B. 3 bis 5 m und Gefäßhöhen von 5 bis 8 m). Dies wiederum ermöglicht ein sehr gutes Flächen/Volumenverhältnis (AN-Verhältnis) des Bottichs, womit sich die Abstrahlverluste reduzieren.

Die erfindungsgemäße Verteilereinrichtung und Heizfläche kann auch leicht in bestehende Maischevorrichtung nachgerüstet werden und bringt dem Kunden ein hohes Energiesparpotenzial.

Es ist besonders vorteilhaft, dass die Heizfläche mit einem Heizmedium, das eine Temperatur, bevorzugt in einem Bereich oder unter seiner Kochtemperatur aufweist, beheizt werden kann. Vorteilhafterweise liegt die Temperatur des Heizmediums 10 bis 30 K über der jeweiligen Produkttemperatur, d.h. hier der Maische, bzw. des Mediums in der Vorrichtung. Die Reduzierung der Temperatur, d.h. das schonende Aufheizen, verringert Fouling, schont die Enzyme und spart wie zuvor erläutert Energie. Durch die Temperaturabsenkung des Heizmediums kann die Häufigkeit und oder Intensität der CIP-Reinigungen im Maischbottich reduziert werden, was wiederum Wasser, Energie und Reinigungsmittel erspart.

Gemäß der vorliegenden Erfindung wird die Maische in einen oberen Bereich, insbesondere dem oberen Viertel der Maischvorrichtung, auf die Heizfläche aufgebracht. Dies führt zu einer maximalen Vergrößerung der Heizfläche und den damit verbundenen Vorteilen.

Die Maische kann auch bereits über die Verteilereinrichtung in die Maischvorrichtung eingemaischt werden. Das heißt, dass die Maische bereits zu Beginn über die Heizfläche geführt wird und dort durch die Temperaturerhöhung besonders effektiv und schnell ausgasen kann, so dass auch eine sauerstoffbedingte Schädigung der Enzyme verhindert werden kann.

Die Vergrößerung der Maischeoberfläche während des Aufheizens hat keinen negativen Einfluss auf die Sauerstoffaufnahme, da sich durch die Energiezufuhr, wie bereits beschrieben, anhaftende Gasteilchen ablösen und zum anderen die Löslichkeit von Sauerstoff in Wasser bzw. Maische, bei höheren Temperaturen zu vernachlässigen ist und bei Kochtemperatur gegen Null geht. Zusätzlich nimmt mit der Energiezufuhr die Wasserdampf- Grenzschichtdicke an der herunterlaufenden Maische zu und fungiert als Barriere zwischen Maischefilm und Behälterraum. Als Vorsichtsmassnahme kann man den Behälterraum auch mit Gas beaufschlagen und/oder einen Unterdruck in der Maischevorrichtung/Maischebehälter erzeugen. Vorteilhafterweise ist die Vorrichtung dann als Druckbehälter für Überdruck und Vakuum ausgelegt. Ein Unterdruck begünstigt das Ausgasen der Maische noch weiter.

Als Gas kann beispielsweise Stickstoff oder Kohlenstoffdioxid verwendet werden, oder ein beliebig anderes Gas und/oder Gasgemisch.

Vorteilhafterweise wird beim Abpumpen des Teils der Maische die Maische aus dem unteren Bereich der Maischvorrichtung, insbesondere aus dem mittleren Bodenbereich, abgepumpt. Vorteilhafterweise kann dann z. B. die Maische im Bottichzentrum mit der schon vorhandenen Maischepumpe abgepumpt werden und dann zu der Verteilereinrichtung nach oben gepumpt werden, so dass keine zusätzliche Pumpe benötigt wird. Durch die Zugabe der umgepumpten Maische von oben verbessert sich also die Durchmischung der Maische in den obersten Flüssigkeitsschichten relativ unabhängig vom Maischefüllstand. Es ist jedoch vorteilhaft, wenn die Maische zusätzlich im unteren Bereich der Maischvorrichtung gerührt wird. Der Maischerührer, das Getriebe und die Antriebseinheit können jedoch dann günstiger ausgelegt sein.

Durch das zusätzliche Vorsehen des Rührers ergibt sich folgende Bewegung der Maische. Durch den vom Rührer bedingten Auftrieb und durch den thermischen Auftrieb strebt die Maische an der Innenfläche der Behälterwandung nach oben. Manche Maischeteilchen haben eine niedrigere Dichte und streben stärker nach oben und schwimmen dort sehr leicht auf. Die meisten Maischeteilchen wandern an der Zarge entlang in den oberen Flüssigkeitsbereich, dann in Richtung Zentrum und von da wieder nach unten, wobei ein Teil abgepumpt wird.

Bei der erfindungsgemäßen Vorrichtung ist es vorteilhaft, wenn die Verteilereinrichtung vorzugsweise als Ringrohr- oder als Halbrohrschlange mit Öffnungen oder einem Ringspalt ausgebildet ist. Die Öffnungen sind dabei vorzugsweise gleichmäßig am Umfang des Ringrohrs oder der ringförmigen Halbrohrschlange angeordnet. Somit kann die Maische gleichmäßig aus der Verteilereinrichtung auf die Heizfläche austreten. Durch die Öffnungen oder den Ringspalt kommt es zu einer Querschnittsreduktion der Maische und einer Vergrößerung der Maischeoberfläche, so dass oberflächennahe Gasblasen einfach aufreißen können.

Vorteilhafterweise ist die Heizung derart ausgebildet, dass mindestens ein Ablauf für das Heizmedium im oberen Bereich der Heizfläche angeordnet ist und mindestens ein Ablauf im unteren Bereich der Heizfläche vorgesehen ist. Zwischen dem mindestens einen oberen Ablauf und mindestens einem unteren Ablauf ist in einem mittleren Bereich mindestens ein Zulauf für das Heizmedium vorgesehen. Der Ausdruck mittlerer Bereich bedeutet zwischen den beiden Abläufen oder dem oberen bzw. unteren Ende der Heizflächen. Somit kann von dem mittleren Zulauf das Heizmedium nach oben und unten fließen. Dies bringt den Vorteil mit sich, dass in einem oberen Bereich der Heizung das Heizmedium im Gegenstrom zur herabfließenden Maische fließt. Auch im unteren Bereich, in dem die Maische sich an der Behälterinnenwand durch die Wirkung des Rührers nach oben bewegt, fließt das Heizmedium im Gegenstrom nach unten, was den Wärmestrom deutlich verbessert.

In jedem Fall verbessert sich der Wärmestrom, wenn die Heizflächen nahezu senkrecht durchströmt werden, dies führt auch zu niedrigeren Rücklauftemperaturen. Im Energiespeicher lagert sich also Wärmeträgermedium weit unter den üblichen 80°C ein und die Größe des Energiespeichertanks und damit auch die Speicherkosten können erheblich reduziert werden. Niedrige Rücklauftemperaturen sind günstig in der Auslegung des Energiespeichertanks und dessen Beladung.

Gemäß einem bevorzugten Ausführungsbeispiel weist die nach innen gewandte Heizfläche der Heizung eine Vielzahl von Unebenheiten auf, insbesondere eine Vielzahl von Nebeneinander und übereinander angeordneten gewölbten Taschen, die miteinander in Verbindung stehen und durch die das Heizmedium fließt. Vorzugsweise ist die Heizfläche so angeordnet, dass die Flussrichtung des Heizmediums durch diese Taschen vorzugsweise so ausgebildet ist, dass einer gewölbten Tasche eine Verbindungsstelle folgt, und/oder die Flussrichtung des flüssigen Mediums über die gewölbten Taschen so ist, dass einer gewölbten Tasche eine Verbindungsstelle folgt. Somit kann der Wärmeübergang und damit der K-Wert auf der Heizmittelseite und der Produktseite erhöht werden.

Um nun z. B. einen Würzekühler mit seinen Auslegungsvolumenströmen und Auslegungstemperaturen zu bedienen befindet sich am Energiespeicher ein Mischer, der wärmeres Wärmeträgermedium, z.B. von höheren Schichten in einem Energiespeicher mit dem relativ kälteren Wärmeträgermedium der unteren Schichten eines Energiespeichers in geforderter Weise zusammenmischt.

Die erfindungsgemäße Vorrichtung umfasst eine Steuereinrichtung, die für einen bestimmten Prozess die Zufuhr einer maximalen Menge an flüssigem Medium, insbesondere einer maximalen Maischemenge bis zu einem maximalen Füllstand steuert, wobei sich die Heizfläche über diesen maximalen Füllstand hinaus erstreckt. Somit ist ein Prozess sichergestellt, bei dem das Medium, d.h. die Maische über die Heizoberfläche zur Spiegeloberfläche herablaufen kann.

Vorteilhafterweise beträgt die Stärke d2 der Heizfläche 0,4 - 2 mm.

Die zuvor beschriebene Vorrichtung ist insbesondere zum Erwärmen von Maische geeignet. Die Vorrichtung ist jedoch gleichermaßen ebenfalls zum Erwärmen anderer flüssiger Medien, insbesondere von Würze geeignet.

Durch die Möglichkeit einer "Verrieselung" von Medien über die Heizfläche kann man auch andere Flüssigkeiten entgasen/ausgasen wie z. B. Anschwänzwasser für den Läuterbottich.

Gemäß einer bevorzugten Ausführungsform fließt die Maische in einem Spalt zwischen der Heizfläche und einem Begrenzungselement, insbesondere einem Begrenzungsblech, in Richtung Spiegeloberfläche der Maische. Somit kann die herabfließende Maische in einem begrenzten Bereich gehalten werden. Daher kann die Maische gut über die Heizfläche geleitet und in dichtem Kontakt zur Heizfläche gehalten werden. Dies kann sich sowohl vorteilhaft auf den Wärmeübergang als auch auf ein Verhindern einer möglichen Sauerstoffaufnahme auswirken. Durch den geringen Abstand zur eigentlichen Heizfläche bzw. die schmale Abmessung (z. B. 3 bis 20 mm) des Spalts, insbesondere Ringspalts, entsteht beim Herabfließen der Maische schnell ein sauerstofffreier Raum, der die Maische vom restlichen Gasraum abschirmt. Das Begrenzungselement endet z. B. knapp oberhalb oder knapp unterhalb des Maischespiegels. Vorteilhafterweise kann dabei das Begrenzungselement in die Maische bzw. den Maischespiegel eintauchen. In diesem Fall kommt die herablaufende Maische gar nicht in Kontakt mit dem restlichen Gasvolumen in der Vorrichtung.

Gemäß diesem bevorzugten Ausführungsbeispiel der Vorrichtung ist das Begrenzungselement, insbesondere ein Begrenzungsblech, derart angeordnet, dass sich zwischen Heizfläche und Begrenzungselement ein Spalt bildet, durch den flüssiges Medium in Richtung Spiegeloberfläche fließt. Der Spalt ist dabei vorzugsweise als Ringspalt ausgebildet. Unter Ringspalt wird hier ein im Querschnitt ringförmig durchgehender Spalt oder aber auch ein unterteilter bzw. in verschiedene Segmente unterteilter Spalt, verstanden.

Das Begrenzungselement erstreckt sich vorzugsweise mindestens von einem Höhenbereich in dem das flüssige Medium von der Verteilereinrichtung auf die Heizfläche aufgebracht wird bis maximal in einen Bereich, der oberhalb des Gefäßbodens liegt. Nur wenn ein Abstand zwischen Begrenzungselement und Boden gegeben ist, kann die Maische in der Vorrichtung zirkulieren. Vorteilhafterweise reicht das Begrenzungselement bis in einen Bereich des mittleren Zulaufs für das Heizmedium. Somit kann das zuvor erläuterte Gegenstromwärmetauscherprinzip unterstützt werden.

Wenn der Spalt, insbesondere der Ringspalt, nach oben hin verschlossen ist, kann ein Nachziehen von Gas in den Spalt verhindert werden.

Es ist auch möglich, das Begrenzungselement selbst als Heizung auszubilden, wobei die Heizfläche dann zur Behälterzarge hin gerichtet ist und die Maische zusätzlich erwärmt werden kann.

Die vorliegende Erfindung wird nachfolgend unter Bezugnahme der folgenden Figuren näher erläutert.
- Fig. 1: zeigt schematisch einen Aufriss einer Vorrichtung gemäß einem ersten Ausführungsbeispiel der vorliegenden Erfindung.
- Fig. 2: zeigt schematisch einen Aufriss einer zweiten Ausführungsform gemäß der vorliegenden Erfindung.
- Fig. 3: zeigt eine perspektivische Darstellung der Heizfläche der erfindungsgemäßen Vorrichtung.
- Fig. 4: zeigt einen Teillängsschnitt durch die erfindungsgemäße Heizung.
- Fig. 5: zeigt einen Querschnitt durch die Heizung
- Fig. 6: zeigt eine weitere Ausführungsform gemäß der vorliegenden Erfindung.

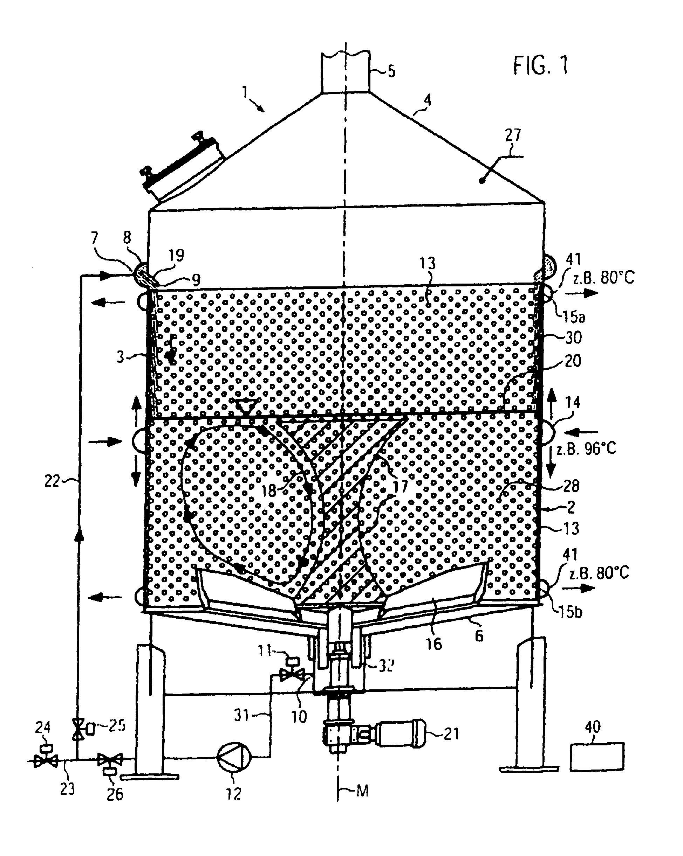

Fig. 1 zeigt eine Vorrichtung gemäß einer ersten Ausführungsform der vorliegenden Erfindung. Die in Fig. 1 gezeigte Vorrichtung ist geeignet zum Maischen bei der Herstellung von Bier. Die Vorrichtung 1 umfasst einen Behälter 2, dessen Seitenwandung 3 vorzugsweise hohlzylindrisch ausgebildet ist. Der Behälter 2 weist eine Haube oder einen Deckel 4 auf, in dem ein Dunstrohr 5 für flüchtige Bestandteile vorgesehen ist. Auch wenn hier nicht dargestellt, kann der Behälter 2 mit einer Energierückgewinnungseinrichtung verbunden sein. Am unteren Ende umfasst der Behälter einen Boden 6, der sich vorzugsweise konisch nach unten verjüngt. In der Mitte des Bodens ist ein Ablauf 10 hier in Form einer Auslaufschüssel vorgesehen, die mit einer Ablaufleitung 31 verbunden ist. In der Ablaufleitung 31 befindet sich ein Stellventil 11. Ferner ist in der Ablaufleitung eine Pumpe 12 vorgesehen zum Abpumpen der Maische oder eines Teils der Maische. Die Maische kann beispielsweise nach dem Maischvorgang über die Leitung 23 bei geöffneten Ventilen 24 und 26 abgeleitet werden. Bei geschlossenem Ventil 24 und geöffneten Ventilen 25 und 26 kann die Maische, wie auch nachfolgend noch näher erläutert wird, über die Zuführleitung 22 zu einer Verteilereinrichtung 8, die sich sowohl außerhalb, als auch innerhalb des Gefäßes befinden kann, geleitet werden.

Weiter befindet sich im unteren Bereich der Vorrichtung, hier in der Mitte des Bottichbodens, ein Rührwerk. Das Rührwerk umfasst einen Motor 21, eine Antriebswelle, sowie Rührflügel 16. In der Auslaufschüssel können Rührblätter 32 vorgesehen sein.

Weiter umfasst die Vorrichtung auch einen Zulauf 7 für Maische. Das Einlagern der Maische kann über die Leitungen 23 und 22 und die Verteilereinrichtung 8 von oben erfolgen. Es ist jedoch auch möglich, die Maische der Vorrichtung 1 über einen nicht dargestellten Zulauf in einem unteren Bereich, beispielsweise im Boden bzw. in der Auslaufschüssel 10, zuzuführen. In einer besonders günstigen Ausführung sind in der Zuführleitung 22 Dosageeinrichtungen zum Beispiel für Enzyme, Calciumsulfat oder Calciumchlorid vorgesehen, durch diese Art der Dosage kann eine gleichmäßige und homogene Dosierung der Zusätze erreicht werden.

An der Seitenwandung 3 des Behälters 2 ist zumindest über einen Teil der Höhe eine vorzugsweise im Wesentlichen hohlzylindrische Heizung 30 vorgesehen. Bei dieser Ausführungsform ist die Heizung als Wand (Zargenheizung) ausgebildet, durch die ein Heizmedium fließt. Die Heizung kann jedoch auch beabstandet oder anliegend an die Seitenwandung 3 angeordnet sein. Die Heizung kann auch durch mehrere, in Umfangsrichtung nebeneinander angeordnete Teilabschnitte gebildet sein.

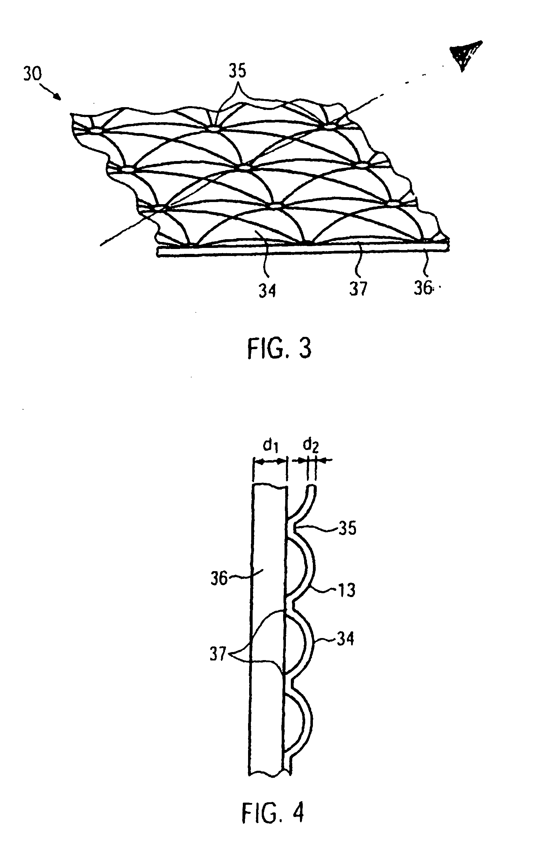

Die Heizung 30 ist vorzugsweise wie in den Fig. 3 bis 5 dargestellt, ausgebildet. Hier ist die Seitenwandung zumindest abschnittsweise doppelwandig ausgebildet und weist eine Außenwandung 36 und eine Innenwand, also Heizfläche 13 auf, wobei die Stärke d1 der Außenwand stärker ist als die Stärke d2 der Innenwand. Die beiden Wandungen sind miteinander an einer Vielzahl von Verbindungsstellen 35 z.B. durch Schweißen verbunden, so dass Unebenheiten zwischen den Verbindungsstellen entstehen. Die Unebenheiten haben beispielsweise die Form einer Vielzahl von nebeneinander und übereinander angeordneten, vorzugsweise aufgeblasenen gewölbten Taschen 34, die miteinander in Verbindung stehen und durch die das Heizmedium fließt. Vorteilhafterweise ist die Heizung 30 derart ausgerichtet, dass, wie insbesondere aus Fig. 3 hervorgeht, in Flussrichtung des Heizmediums einer gewölbten Tasche 34 eine Verbindungsstelle 35 folgt. Der Pfeil in Fig. 3 zeigt die bevorzugte Flussrichtung des Heizmediums. Somit entsteht in der Heizfläche eine sehr hohe Turbulenz des Heizmediums und ein hoher Wärmeübergangskoeffizient auf der Heizmittelseite. Die Stärke d2 der Heizfläche kann beispielsweise 0,4 bis 2 mm betragen. d1 kann in einem Bereich von 3 bis 10 mm liegen.

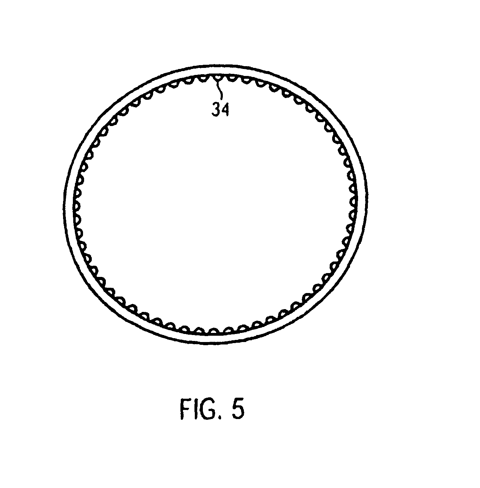

Die Taschen werden also vorzugsweise derart durchströmt, dass nach jeder Taschenwölbung (Bereich mit höchstem Querschnitt) eine Verschweißung folgt. Somit entsteht in der Heizfläche eine sehr hohe Turbulenz des Wärmeträgermediums und damit einen hohen Wärmeübergangskoeffizienten auf der Heizmittelseite. Das heißt, dass sich natürlich auch auf der Produktseite Unebenheiten der Heizfläche, sowohl im Querschnitt als auch im Längsschnitt betrachtet, zwischen den Verbindungsstellen ergeben, wie insbesondere aus Fig. 4 und 5 hervorgeht. Durch die Ausbildung dieser Unebenheiten wird die Fliesseigenschaft der Produktflüssigkeit (z.B. Maische) positiv beeinflusst und ein gleichmäßigerer Fluss der Produktflüssigkeit über die Zargenheizfläche stellt sich ein. Durch die Ausbildung dieser Unebenheiten kann auch ein verbesserter Wärmeübergang auf die Maische erzielt werden wodurch wiederum die Temperatur des Heizmediums erniedrigt werden kann und sich natürlich auch die Rücklauftemperaturen weiter erniedrigen lässt.

Wie aus Fig. 1 hervorgeht, umfasst die Heizung mindestens einen Zulauf 14 für das Heizmedium, der im mittleren Bereich der Heizung 30 (in Richtung der Höhe betrachtet) angeordnet ist. Der Zulauf 14 kann beispielsweise als Ringleitung um den Behälter 2, hier in Form eines Heizrohres, angeordnet sein und kann mehrere über den Umfang verteilte Öffnungen aufweisen, über die das Heizmedium in die Heizung 30, hier die Hohlräume 37 (Fig. 3), geleitet wird.

Darüber hinaus umfasst die Heizung 30 mindestens einen Ablauf 15a für das Heizmedium im oberen Bereich der Heizung 30. Mindestens ein Ablauf bedeutet hier, dass um den Umfang verteilt mindestens eine Öffnung in der Heizung vorgesehen ist, über die das Heizmedium aus den Hohlräumen 37 abgeleitet werden kann. Der mindestens eine Ablauf steht mit einer Leitung 41, hier einer Halbrohrschlange, in Verbindung, die zumindest abschnittsweise um dem Umfang der Seitenwandung 3 des Behälters 2 angeordnet ist. Diese Ringleitung weist darüber hinaus ebenfalls mindestens eine Ableitung 41 für das Heizmedium auf.

Ebenso ist mindestens ein Ablauf 15b im unteren Bereich der Heizung 30 vorgesehen, der, wie im Zusammenhang mit dem mindestens einen oberen Ablauf 15a beschrieben wurde, aufgebaut ist. Das bedeutet, dass das Wärmeträgermedium über den Zulauf 14 in die Heizung einlaufen kann und sich, wie durch die Pfeile dargestellt, bis nach oben und nach unten zu den entsprechenden Abläufen 15a, b fließt.

Die Heizung 30 erstreckt sich bis in einen Bereich, der oberhalb der Spiegelfläche 20 der Maische liegt. Mit der erfindungsgemäßen Vorrichtung können auch sehr kleine Teilmaischemengen ohne Bodenheizung erwärmt werden. Es kann auch eine Bodenheizung vorgesehen sein, die ebenso wie die Zargenheizung, wie in Zusammenhang mit den Fig. 3 und 4 beschrieben wurde, aufgebaut ist. Eine solche Bodenheizung ist jedoch nicht zwingend notwendig.

In einem oberen Bereich der Heizung 30 oder über der Heizung 30 ist eine Verteilereinrichtung 8 vorgesehen, die die Maische oberhalb der Spiegeloberfläche 20 auf die Heizfläche 13 aufbringt, derart, dass die Maische über die Heizfläche 13 bis zur Spiegeloberfläche 20 der Maische herabläuft. Das obere Ende der Heizung bzw. die Verteilereinrichtung 8 sind dabei im Wesentlichen im oberen Viertel des Behälters 2 vorgesehen. Die Verteilereinrichtung kann innerhalb oder außen am Behälter angeordnet sein.

Die Anordnung der Heizflächen und deren Durchströmung mit einem Wärmeträgermedium kann natürlich auch in Kombination mit einer Dampf oder Hochdruckheißwasser beheizten Heizfläche erfolgen, oder man führt einem Wärmeträgermedium "Wasser" direkt Dampf zu und führt am Ende die entsprechende "Kondensatmenge" wieder ab.

Den gleichen Effekt kann man erreichen, indem man das Wärmeträgermedium vor Eintritt in die Heizflächen nachheizt. Dies ist z.B. bei der Produktion von Kochmaischen erforderlich, bei der die nötige treibende Kraft durch rückgewonnene Wärme oft nicht erreicht werden kann.

Bei dem in Fig. 1 gezeigten Ausführungsbeispiel ist die Verteilereinrichtung als ein Halbrohr ausgebildet, das um den äußeren Umfang des Behälters 2 läuft (selbiges kann sich aber auch auf der Innenseite der Behälterwandung befinden). Im Bereich des Halbrohrs sind um den Umfang der Seitenwandung gleichmäßig verteilte Durchbrüche 9 oder aber ein Ringspalt vorgesehen. Am oberen Ende der Öffnung 9 kann eine Umlenkeinrichtung, hier ein Umlenkblech 19 vorgesehen sein, das sich zumindest im Bereich der Öffnungen schräg nach unten erstreckt und die Maische zu der Heizfläche 13 lenkt.

Die im Behälter 2 befindliche Maische 28 kann so im Kreislauf aus dem unteren Bereich über die Pumpe 12 die Leitung 31 und 22 der Verteilereinrichtung 8 zugeführt werden, wobei die Maische dann über die Verteilereinrichtung 8 über die Heizfläche 13 in einem dünnen Strom rückgeführt wird.

Ferner kann die Vorrichtung einen Anschluss für Gas 27 aufweisen, derart, dass die Maischevorrichtung 1 mit Gas beaufschlagt werden kann. Die Vorrichtung kann auch eine nicht gezeigte Einrichtung zum Erzeugen eines Unterdrucks in der Vorrichtung aufweisen. Die Vorrichtung ist dann vorzugsweise als Druckbehälter ausgebildet.

Ferner kann die Vorrichtung auch eine Steuerung 40 aufweisen, die die Zufuhr einer maximalen Maischemenge bis zu einem maximalen Füllstand steuert, wobei sich die Heizfläche 13 über diesen maximalen Füllstand hinaus erstreckt. Weiter kann die Vorrichtung einen nicht dargestellten Füllstandsmesser und auch Temperaturfühler aufweisen. Die Steuerung 40 kann die Stellventile sowie die Pumpe ansteuern und auch die Heizmitteltemperatur vorzugsweise über eine Rücklaufbeimischung regeln. Die Vorlauftemperatur und damit einhergehend die Rücklauftemperatur, sollen so niedrig wie möglich sein um die oben aufgezeigten Vorteile möglichst optimal zu erreichen.

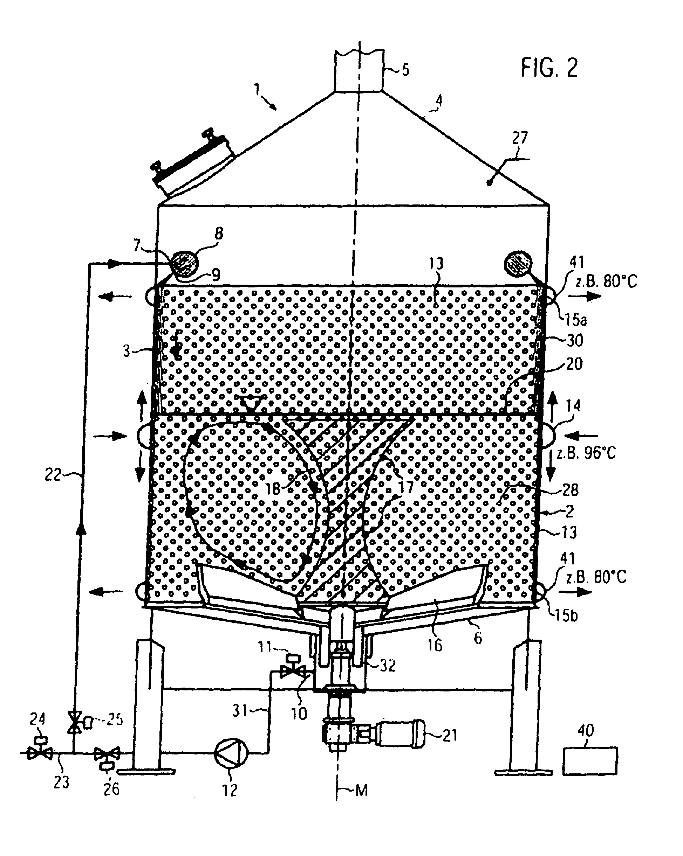

Fig. 2 zeigt eine mögliche zweite Ausführungsform der vorliegenden Erfindung, die der in Fig. 1 gezeigten Ausführungsform entspricht, mit der Ausnahme, dass die Verteilereinrichtung 8 hier nicht als außen an dem Behälter 2 angeordnete Halbrohrschlange ausgebildet ist, sondern als Ringrohr, das im Inneren des Behälters 3 angeordnet ist. Das Ringrohr weist dabei ebenfalls mehrere über den Umfang verteilte Durchbrüche 9 oder aber einen Ringspalt auf, wobei die Durchbrüche und/oder der Ringspalt derart angeordnet sind, dass die Maische auf die Heizfläche 13 aufgebracht wird und an dieser bis zur Spiegeloberfläche 20 herabläuft. Wenn auch nicht dargestellt, kann auch an der Ringleitung eine entsprechende Umlenkeinrichtung vorgesehen sein, die die Maische in Richtung Heizung 13 umlenkt. Die in Fig. 1 und Fig. 2 gezeigten Rohrschlangen bzw. Ringleitungen müssen nicht durchgängig ausgebildet sein sondern können auch aus mehreren Segmenten bestehen, die dann jeweils eine eigene Zuführleitung für Maische aufweisen.

Mit der Möglichkeit ein Produkt (neben Maische z.B. auch CIP-Reinigungsflüssigkeit,) über der Heizfläche herunterlaufen lassen zu können, kann diese Vorrichtung auch als Heizung oder Nachheizung für verschiedene Medien dienen, wobei die Nachheizung von z.B. der Sudhaus-CIP-Reinigungsflüssigkeit einen separaten Wärmetauscher einsparen kann und zusätzlich die rückgewonnene Energie aus dem Prozess verwendet werden kann (was wiederum Primärenergie einspart).

Die Erfindung ermöglicht auch den Bau von schlankeren, höheren und günstigeren Maischegefäßen (mit Füllständen von z.B. 3 bis 5 m und Gefäßhöhen von 5 bis 8 m bei Durchmessern von vorzugsweise 2 - 6 m). Dies wiederum ermöglicht ein sehr gutes A/V-Verhältnis, womit sich die Abstrahlverluste reduzieren.

Nachfolgend wird das erfindungsgemäße Verfahren unter Bezugnahe auf die Fig. 1 näher erläutert.

Bei dem erfindungsgemäßen Verfahren wird zum Maischen zunächst Maische 28 in den Behälter 2 eingeleitet. Das kann beispielsweise zumindest teilweise über den Zulauf 7 und über die Verteilereinrichtung 8 erfolgen. Dabei sind die Ventile 24 und 25 geöffnet und Ventil 26 geschlossen. Das bedeutet, dass bereits beim Einleiten der Maische in den Behälter 2 die Maische als dünner Film, wie durch den Pfeil dargestellt, an der Heizungsoberfläche 13 nach unten läuft und erwärmt wird. Durch die Temperaturerhöhung der Maische vergrößern sich dabei Gasblasen in dem dünnen Film und können ausgetrieben werden. Zusätzlich nimmt die Viskosität an der wärmeren Grenzschicht ab, wodurch sich die Enzyme leichter lösen können und aktiver sind. Der Behälter 2 kann dabei über die Zufuhr 27 mit Gas, z.B. Stickstoff, beaufschlagt worden sein. Die Vorrichtung wird befüllt, bis ein bestimmter Füllstand erreicht ist. Die entsprechende Schaltung der Ventile etc. wird von der Steuereinrichtung 40 gesteuert. Die Heizung 30 wird hier mit einem Heizmedium, z.B. Wasser beheizt, das eine Temperatur im Bereich der Kochtemperatur in einer besonders günstigen Ausführung von 70 - 110 °C aufweist, z.B. idealerweise 96 °C aufweist. Wie zuvor beschrieben, verteilt sich das Heizmedium vom Zulauf 14 nach oben und unten in Richtung des mindestens einen Ablaufs 15a, b. Beim Verlassen der Heizung hat das Heizmedium dann beispielsweise eine Temperatur von 80 °C. Vorzugsweise beträgt die Vorlauftemperatur des Heizmediums 10 -30 K mehr als die jeweilige Produkttemperatur der Maische bzw. des zu erwärmenden Mediums. Das heißt, dass mit steigender Produkttemperatur die Heizmediumtemperatur derart geregelt wird, dass die Temperaturdifferenz zwischen Produkt und Heizmedium in einem Bereich von 10 - 30 K liegt. Die Anordnung der Heizflächen und deren Durchströmung mit einem Wärmeträgermedium kann natürlich auch in Kombination mit einer Dampf oder Hochdruckheißwasser beheizten Heizfläche erfolgen, oder man führt einem Wärmeträgermedium "Wasser" direkt Dampf zu und führt am Ende die entsprechende "Kondensatmenge" wieder ab. Den gleichen Effekt kann man erreichen, indem man das Wärmeträgermedium vor Eintritt in die Heizflächen nachheizt. Dies ist z.B. bei der Produktion von Kochmaischen erforderlich, bei der die nötige treibende Kraft durch rückgewonnene Wärme oft nicht erreicht werden kann.

Aufgrund der vergrößerten Heizfläche, die sich auch oberhalb der Spiegelfläche 20 erstreckt, ist zum Beheizen der Maische kein Heißdampf mit üblichen 140-150°C nötig, so dass ein schonenderes Aufheizen bei geringeren Temperaturen (<140°C) möglich ist, vorzugsweise im Bereich oder unterhalb der Kochtemperatur des flüssigen Heizmediums. Darüber hinaus ist es möglich, dass als Wärmemedium Heißwasser aus der Wärmerückgewinnung verwendet werden kann, d.h. Heizmedium, das durch Abwärme, die beispielsweise beim Würzekühlen anfällt, erwärmt wurde. Natürlich kann das durch die Abwärme erwärmte Heizmedium auch mittels eines Boosters auf höhere Temperaturen angehoben werden, um prozess- oder wochenbedingte Schwankungen auszugleichen.

Dadurch, dass kein Hochdruck-Heißwasser verwendet wird, kann die Wandstärke d2 der Heizfläche 13 schwächer und dünner ausgelegt werden, was wiederum einen verbesserten Wärmeübergang mit sich bringt. Beispielsweise kann die Wandstärke d2 in einem Bereich von 0,4 bis 2mm liegen. Dies wirkt sich auch positiv auf die Schweißarbeiten aus.

Die Maische 28 im Behälter 2 wird während des Maischprozesses zumindest zeitweise abgepumpt und im Kreislauf erneut über die Leitung 31, Pumpe 12 und Leitung 22 der Verteilereinrichtung 8 zugeführt. Über die Verteilereinrichtung 8 wird dann die Maische möglichst gleichmäßig um den Umfang des Behälters 2 verteilt auf die Heizfläche 13 aufgebracht und fließt als dünner Film/Strom in Richtung Spiegeloberfläche 20. Die Dicke des herablaufenden Films der Maische liegt in einem Bereich von vorzugsweise 1 bis 10mm. Die Fördermenge der über die Verteilereinrichtung geführten Maische variiert in gleicher Weise aber in zusätzlicher Abhängigkeit mit dem Bottichdurchmesser.

Die Heizflächenvergrößerung reduziert die Problematik der viskositätsbedingten Erniedrigung des Wärmeübergangs bei höheren Konzentrationen (insbesondere bei Hammermühlenmaischen mit Stärketrägern wie Sorghum oder andere Rohfruchtrohstoffe) oder während der Verkleisterungsphase. Unter besonders günstigen Umständen kann hierdurch der sehr teure Einsatz von technischen Enzymen reduziert werden.

Wie auch im Zusammenhang mit dem Einlagern der Maische beschrieben, können Gaseinschlüsse durch die Temperaturerhöhung beim Herabfließen der Maische ausgetrieben werden. Oberflächennahe Gasblasen können einfach aufreißen. Beim Herablaufen der Maische können auch weitere flüchtige Stoffe wie DMS aus der Maische ausgetrieben werden. Die Maische kann hier besonders gut im Gegenstrom erwärmt werden, da wie durch die Pfeile in Fig. 1 hervorgeht, die Maische über die Heizfläche 13 nach unten fließt, während das Heizmedium, wie ebenfalls durch die Pfeile dargestellt ist, nach oben fließt. Das heißt, dass die Maische in einem Bereich oberhalb der eingelagerten Maische 28 zusätzlich erwärmt werden kann. Im unteren Bereich der Vorrichtung wird die Maische über das Rührwerk 16 gerührt. Aufgrund der zusätzlichen Durchmischung durch die im Kreislauf geführte Maische kann das Rührwerk sehr viel kleiner dimensioniert werden und Scherkräfte können reduziert werden. Durch die Zugabe der Maische von der Verteilereinrichtung 8 aus verbessert sich die Durchmischung der Maische in den obersten Flüssigkeitsschichten relativ unabhängig vom Maischefüllstand. Durch den von den Rührflügeln 16 bedingten Auftrieb, sowie durch den thermischen Auftrieb strebt die Maische an der Seitenwandung 3, wie durch den Pfeil dargestellt ist, nach oben. Maischeteilchen mit niedriger Dichte streben stärker nach oben und schwimmen dort sehr leicht auf. Die meisten Maischeteilchen wandern im oberen Flüssigkeitsbereich in Richtung Zentrum und von da an wieder nach unten, so dass sich der mit 18 bezeichnete Kreislauf ergibt. Im Bottichzentrum 17 befindet sich oft eine etwas "kältere" Maische. Die Homogenität der Maischetemperatur wird dadurch verbessert, dass ein Teil der Maische von unten, hier über die Auslaufschüssel 10, aus dem mittleren Bereich abgezogen wird und schließlich wieder auf die temperierte Heizfläche 13 gegeben wird. Dies verbessert die Enzymaktivität wesentlich. Besonders bei sehr konzentrierten Maischen (high-gravity-Verfahren) wird z. B. die Homogenität verbessert. Auch wenn in der Figur 1 und 2 nicht dargestellt, kann um die Homogenität zu verbessern auch im Bottichzentrum 17 über die Auslaufschüssel 10 mit einer nicht dargestellten Leitung zusätzlich oder beim Einmaischen Maische eingebracht werden.

Aufgrund des hohen Volumenstroms in der Auslaufschüssel 10 kann man auf Rührblätter 32 in der Auslaufschüssel verzichten. Im untern Bereich kann die Maische durch die Heizung 30 ebenfalls im Gegenstrom aufgeheizt werden, da hier die Maische an den Seitenwandungen nach oben steigt, wie durch die Pfeile dargestellt ist, während das Heizmedium nach unten fließt. Die Menge der Maische, die im Kreislauf über die Leitung 22 der Verteilereinrichtung 8 aus dem unteren Bereich des Behälters 2 zugeführt wird, kann durch Einstellen der entsprechenden Stellventile sowie der Pumpleistung 12 eingestellt werden.

Am Ende des Maischvorgangs kann dann die Maische über den Ablauf 10 und geöffneten Ventilen 11, 26 sowie 24 über die Pumpe 12 abgepumpt werden. Hier wird die Maische über die Maischepumpe 12 sowohl abgepumpt als auch im Kreislauf gepumpt. Es können jedoch auch zwei unterschiedliche Pumpen vorgesehen sein.

Das zuvor beschriebene Maischverfahren kann wegen der niedrigen Heizmediumtemperaturen auch ohne striktes Einhalten der Rasten mit konstanter Temperatur durchgeführt werden. Die Aufheizrate während dieser Rast liegt dann bei z.B. 0,1 K/min.

Hierbei wird das flüssige Medium, z.B. Maische, mit einer vorbestimmten Heizrate, z.B. 0,8 K/min, bis knapp vor die klassische Rasttemperatur aufgeheizt. Während der z.B. 20-minütigen Rast wird dann mit einer deutlich kleineren Heizrate, z.B. mit 0,1 K/min, weiter "geheizt", so dass die Temperatur des flüssigen Mediums am Ende der "Rast" etwas über der klassischen Rasttemperatur liegt, jedoch immer noch im Optimum des jeweiligen Enzymbereiches.

Die in Fig. 1 und 2 gezeigte Vorrichtung wurde im Zusammenhang mit einem Maischprozess beschrieben. Es ist jedoch ebenfalls möglich, diese Vorrichtung als Vorrichtung zum Erwärmen von anderen Medien, insbesondere Würze zu verwenden. Statt der Maische 28 würde dann z. B. Würze über die Verteilereinrichtung 8 und auf die Spiegeloberfläche der Würze 20 geleitet.

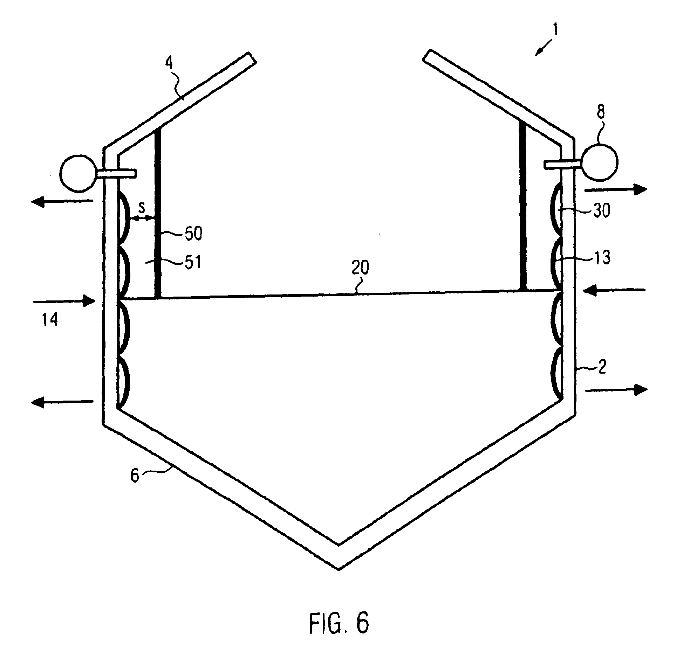

Fig. 6 zeigt eine mögliche Variante der in den Fig. 1 bis 5 dargestellten Ausführungsbeispiele. Die erfindungsgemäße Vorrichtung 1 ist dabei nur grob schematisch dargestellt. Das Ausführungsbeispiel entspricht den vorherigen Ausführungsbeispielen mit der Ausnahme, dass zusätzlich ein Begrenzungselement 50, hier in Form eines Begrenzungsblechs, vorgesehen ist. Bei dieser speziellen Ausführungsform ist das Begrenzungselement 50 derart ausgebildet, dass sich ein Spalt 51 zwischen der Heizfläche 13 und dem Begrenzungselement ergibt. Das Begrenzungselement 50 ist vorteilhafterweise so ausgebildet und angeordnet, dass sich ein Ringspalt ergibt. Der Ringspalt kann durchgängig sein oder aber aus mehreren ringförmig angeordneten Segmenten bestehen. Die Spaltbreite s beträgt 3 bis 20 mm. In einem unteren Bereich (in den unteren 5 bis 30 %) des Begrenzungselements 50 kann die Abmessung der Spaltbreite auf eine geringere Abmessung reduziert werden (also kurz bevor die herablaufende Maische in die restliche Maische hineinläuft, da hier eine geringe Gefahr der Sauerstoffaufnahme besteht).

Das Begrenzungselement 50 erstreckt sich zumindest von einem Bereich der auf einer Höhe liegt, auf der die Maische von der Verteilereinrichtung auf die Heizfläche 13 aufgebracht wird. So wird die Maische bereits unmittelbar beim Aufbringen auf die Heizfläche 13 von dem Begrenzungselement 50 nach unten geleitet. Das Begrenzungselement erstreckt sich nicht ganz bis zum Gefäßboden 6 sondern endet oberhalb, damit eine Zirkulation gewährleistet ist. Vorzugsweise endet das Begrenzungselement im Bereich der mittleren Heizmittelzuführung 14, um so das Gegenstromwärmetauscherprinzip, das im Zusammenhang mit den Fig. 1 und 2 beschrieben wurde, zu unterstützen. Das Begrenzungselement 50 kann also knapp oberhalb bzw. knapp unterhalb des Maischespiegels enden. Vorteilhafterweise ist die Länge des Begrenzungselements 50 derart ausgelegt, dass es in die Spiegeloberfläche 20 eintaucht. Vorteile des Begrenzungselements ergeben sich aber auch noch, wenn das Begrenzungselement bis zu 20 cm oberhalb der Spiegeloberfläche endet (bei Bauhöhen von vorzugsweise ca. 2,5 bis 8 m der Vorrichtung).

Der Spalt bzw. Ringspalt 51 ist vorteilhafterweise nach oben verschlossen, so dass kein Gas aus dem Behälter 2 in den Ringspalt nachgezogen werden kann, wenn die Maische durch den Spalt 51 zur Spiegeloberfläche hin herabläuft. In Fig. 6 ist das Begrenzungselement 50 mit dem Deckel 4 verbunden. Das Begrenzungselement 50 kann auch als Heizung ausgebildet sein und eine nach außen, d. h. zur Außenwandung des Behälters 2 gewandte Heizfläche aufweisen. Dadurch kann die Maische zusätzlich beheizt werden. Vorteilhafterweise durchströmt dann das Heizmedium das Begrenzungselement von unten nach oben, um die Maische im Gegenstrom zu erwärmen. Bevorzugt kann die Heizfläche Unebenheiten aufweisen. Insbesondere, wenn das Begrenzungselement 50 als Heizfläche ausgebildet ist, kann es auch gemäß einer weiteren Ausführungsform zur verbesserten Erwärmung vorteilhaft sein, wenn es weiter in die Maische ragt, jedoch maximal bis etwa 50 cm oberhalb des Bodens.

Mit dem erfindungsgemäßen Begrenzungselement kann die herabfließende Maische entlang der Heizfläche 13 geleitet und in einem begrenzten Bereich gehalten werden. Somit kann einerseits ein etwaiger geringfügiger Sauerstoffeintrag weiter minimiert oder ganz verhindert werden und andererseits auch der Wärmeübergang verbessert werden. Durch den geringen Abstand des Begrenzungselements zur eigentlichen Heizfläche 13 bildet sich ein sehr schmaler Ringspalt, so dass sich schnell ein sauerstofffreier Raum bildet und die Maische vom Gasraum mehr oder weniger abgeschirmt ist. Das Begrenzungselement ermöglicht auch, dass die Masche im Wesentlichen tangential in den Behälter 2 eingebracht werden kann. Die Verteilereinrichtung ist dann als mindestens ein Tangentialzulauf ausgebildet, derart, dass die Maische im Wesentlichen tangential an die Innenseite der Behälterwand oder das Begrenzungselement angeströmt wird, so dass sich eine um die Mittelachse M drehende Abwärtsströmung ergibt.

## Patentansprüche

1. Verfahren zum Maischen bei der Herstellung von Bier mit folgenden Schritten:
Einleiten von Maische (28) in eine Maischvorrichtung (1),
Abpumpen eines Teiles dieser Maische und
Zuführen dieser Maische zu einer Verteilereinrichtung (8), die die Maische oberhalb der Spiegeloberfläche (20) der Maische auf eine Heizfläche (13) an der Seitenwandung (3) eines Behälters (2) der Maischvorrichtung aufbringt, derart, dass die Maische über die Heizfläche (13) bis zur Spiegeloberfläche (20) der Maische herabläuft.

2. Verfahren nach Anspruch 1, **dadurch gekennzeichnet, dass** die Heizfläche mit einem Heizmedium beheizt wird, das eine Vorlauftemperatur, die vorzugsweise 10-30K höher ist als die jeweilige Produkttemperatur der zu erwärmenden Maische während der verschiedenen Prozessabschnitte aufweist und/oder die Vorlauftemperatur bei flüssigem Heizmedium im Bereich der Siedetemperatur des Heizmediums liegt oder kleiner ist als die Siedetemperatur.

3. Verfahren nach Anspruch 1 oder 2, **dadurch gekennzeichnet, dass** die Maische in einem oberen Bereich, insbesondere im oberen Viertel der Maischvorrichtung (1) auf die Heizfläche (13) aufgebracht wird.

4. Verfahren nach mindestens einem der Ansprüche 1 bis 3, **dadurch gekennzeichnet, dass** die Maische vorzugsweise über die Verteilereinrichtung in die Maischvorrichtung (1) eingelagert wird.

5. Verfahren nach mindestens einem der Ansprüche 1 bis 4, **dadurch gekennzeichnet, dass** die Maischvorrichtung (1) mit Gas beaufschlagt wird und/oder ein Unterdruck in der Maischvorrichtung erzeugt wird.

6. Verfahren nach mindestens einem der Ansprüche 1 bis 5, **dadurch gekennzeichnet, dass** beim Abpumpen des Teiles der Maische, die Maische aus dem unteren Bereich der Maischvorrichtung (1), insbesondere aus dem mittleren Bodenbereich abgepumpt wird.

7. Verfahren nach mindestens einem der Ansprüche 1 - 6, **dadurch gekennzeichnet, dass** die Maische im unteren Bereich der Maischvorrichtung (1) gerührt wird.

8. Vorrichtung zum Durchführen des Verfahrens nach mindestens Anspruch 1, mit
einem Behälter (2), der einen Zulauf (7) und einen Ablauf (10) aufweist,
einer Heizung (30) an der Seitenwandung (3) des Behälters (2) zum Beheizen von Maische (28) und mit
einer Pumpeinrichtung (12) zum Pumpen der Maische (28) in eine Verteilereinrichtung (8), wobei die Verteilereinrichtung (8) so ausgebildet ist, dass die Maische auf eine sich über die Spiegeloberfläche (20) erstreckende Heizfläche (13) der Heizung aufgebracht wird und von dort bis zur Spiegeloberfläche herablaufen kann,
wobei die Vorrichtung eine Steuereinrichtung (40) umfasst, die die Zufuhr einer maximalen Menge an Maische bis zu einem maximalen Füllstand steuert, wobei sich die Heizfläche (13) über diesen maximalen Füllstand hinaus erstreckt.

9. Vorrichtung nach Anspruch 8, **dadurch gekennzeichnet, dass** die Verteilereinrichtung (8) im oberen Viertel des Behälters (2) angeordnet ist und
vorzugsweise als Ringrohr oder als Halbrohrschlange mit Öffnungen (9) oder einem Ringspalt (9) ausgebildet ist.

10. Vorrichtung nach mindestens einem der Ansprüche 8 oder 9, **dadurch gekennzeichnet, dass** die Heizung (30) mindestens einen Ablauf (15a) für das Heizmedium im oberen Bereich der Heizung, mindestens einen Ablauf (15b) im unteren Bereich der Heizung und mindestens einen Zulauf (14) für das Heizmedium, der im mittleren Bereich der Heizung (30) angeordnet ist, wobei das Heizmedium die Heizfläche vorzugsweise vertikal durchströmt, wodurch sich ein Gegenstrom- Wärmeübertragung ergibt.

11. Vorrichtung nach mindestens einem der Ansprüche 8 bis 10, **dadurch gekennzeichnet, dass** die nach innen gewandte Heizfläche (13) der Heizung (30) eine Vielzahl von Unebenheiten aufweist, insbesondere eine Vielzahl von nebeneinander und übereinander angeordneten gewölbten Taschen (34), die miteinander in Verbindung stehen und durch die das Heizmedium fließt.

12. Vorrichtung nach mindestens einem der Ansprüche 8 bis 11, **dadurch gekennzeichnet, dass** die Flussrichtung des Heizmediums durch diese Taschen vorzugsweise so ausgebildet ist, dass einer gewölbten Tasche (34) eine Verbindungsstelle (35) folgt, und/oder die Flussrichtung des flüssigen Mediums über die gewölbten Taschen so ist, dass einer gewölbten Tasche (34) eine Verbindungsstellen (35) folgt.

13. Vorrichtung nach Anspruch 11, **dadurch gekennzeichnet, dass** die Stärke d2 der Heizfläche 0,4-2mm beträgt.

14. Verfahren nach mindestens einem der Ansprüche 1 bis 7, **dadurch gekennzeichnet, dass** die Maische (28) in einen Spalt (51), zwischen der Heizfläche (13) und einem Begrenzungselement (50), insbesondere einem Begrenzungsblech, in Richtung Spiegeloberfläche (20) der Maische herabläuft.

15. Vorrichtung nach mindestens einem der Ansprüche 8 bis 13, **dadurch gekennzeichnet, dass** die Vorrichtung weiter ein Begrenzungselement, insbesondere ein ringförmiges Begrenzungsblech aufweist, das derart angeordnet ist, dass sich zwischen Heizfläche (13) und Begrenzungselement ein Spalt (51) bildet, durch den das flüssige Medium in Richtung Spiegeloberfläche (20) fließt.

16. Vorrichtung nach mindestens einem der Ansprüche 8 bis 13 oder 15, **dadurch gekennzeichnet, dass** sich das Begrenzungselement mindestens von einem Höhenbereich in dem das flüssige Medium von der Verteilereinrichtung (8) auf die Heizfläche (13) aufgebracht wird bis maximal in einen Bereich, der oberhalb des Gefäßbodens (6) liegt erstreckt.

17. Vorrichtung nach mindestens Anspruch 15 oder 16, **dadurch gekennzeichnet, dass** der Spalt (51) ein Ringspalt ist und insbesondere nach oben hin verschlossen ist.

18. Vorrichtung nach mindestens einem der Ansprüche 8 bis 13 und 15 bis 17, **dadurch gekennzeichnet, dass** das Begrenzungselement (50) als Heizung ausgebildet ist.

## Claims

1. Method for mashing in the production of beer having the following steps:
Introducing mash (28) into a mashing device (1),
Pumping off a portion of this mash, and
Feeding this mash to a distribution device (8) that, above the surface level (20) of the mash, applies the mash onto a heating surface (13) at the side wall (3) of a vessel (2) of the mashing device in such a manner that the mash runs down along the heating surface (13) until reaching the surface level (20) of the mash.

2. Method according to Claim 1, **characterised in that** the heating surface is heated with a heating medium that has a flow temperature which is preferably 10 - 30 K higher than the respective product temperature of the mash that is to be heated during the various process sections and / or the flow temperature in the case of liquid heating medium lies in the range of the boiling temperature of the heating medium or is less than the boiling temperature.

3. Method according to Claim 1 or 2, **characterised in that** the mash is applied onto the heating surface (13) in an upper area, particularly in the upper quarter of the mashing device (1).

4. Method according to at least one of the Claims 1 to 3, **characterised in that** the mash is preferably placed into the mashing device (1) via the distribution device.

5. Method according to at least one of the Claims 1 to 4, **characterised in that** the mashing device (1) is supplied with gas and / or a negative pressure is produced in the mashing device.

6. Method according to at least one of the Claims 1 to 5, **characterised in that** when pumping off a portion of the mash, the mash is pumped off from the lower area of the mashing device (1), particularly from the middle base area.

7. Method according to at least one of the Claims 1 to 6, **characterised in that** the mash is agitated in the lower area of the mashing device (1).

8. Device for carrying out the method according to at least Claim 1, having
a vessel (2) that has an inlet (7) and an outlet (10),
a heater (30) at the side wall (3) of the vessel (2) for heating mash (28), and having a pumping device (12) for pumping the mash into a distribution device (8),
wherein the distribution device (8) is formed in such a manner that the mash is applied onto a heater heating surface (13) that extends above the surface level (20) and it can run down from there until reaching the surface level, wherein
the device comprises a control unit (40) that controls the feed of a maximum quantity of mash up to a maximum filling level, wherein the heating surface (13) extends upwards beyond this maximum level.

9. Device according to Claim 8, **characterised in that** the distribution device (8) is arranged in the upper quarter of the vessel (2), and
preferably is formed as an annular pipe or as a half-pipe coil having openings (9) or an annular gap (9).

10. Device according to at least one of the Claims 8 or 9, **characterised in that** the heater (30) has at least one outlet (15a) for the heating medium in the upper area of the heater, at least one outlet (15b) in the lower area of the heater and at least one inlet (14) for the heating medium, said inlet being arranged in the middle area of the heater (30), wherein the heating medium flows through the heating surface preferably vertically, as a result of which a counterflow heat transfer occurs.

11. Device according to at least one of the Claims 8 to 10, **characterised in that** the inwardly-facing heating surface (13) of the heater (30) has a multitude of unevennesses, in particular a multitude of arched pockets (34) arranged next to one another and above one another, that are connected to one another and through which the heating medium flows.

12. Device according to at least one of the Claims 8 to 11, **characterised in that** the flow direction of the heating medium through these pockets is preferably formed in such a manner that an arched pocket (34) is followed by a joint (35), and / or the flow direction of the liquid medium over the arched pockets is such that an arched pocket (34) is followed by a joint (35).

13. Device according to Claim 11, **characterised in that** the thickness d2 of the heating surface amounts to 0.4 - 2 mm.

14. Method according to at least one of the Claims 1 to 7, **characterised in that** the mash (28) runs down, in a gap (51), between the heating surface (13) and a confining element (50), in particular a confining plate, in the direction of the surface level (20) of the mash.

15. Device according to at least one of the Claims 8 to 13, **characterised in that** the device further has a confining element, particularly a ring-shaped confining plate, that is arranged in such a manner that a gap (51) is formed between the heating surface (13) and the confining element, wherein the liquid medium flows through this gap in the direction of the surface level (20).

16. Device according to at least one of the Claims 8 to 13 or 15, **characterised in that** the confining element extends at least from a height range in which the liquid medium is applied on to the heating surface (13) by the distribution device (8) maximally into an area that lies above the container base (6).

17. Device according to at least Claim 15 or 16, **characterised in that** the gap (51) is an annular gap and particularly is closed at the top.

18. Device according to at least one of the Claims 8 to 13 and 15 to 17, **characterised in that** the confining element (50) is formed as a heater.

## Revendications

1. Procédé destiné à l'empâtage lors de la fabrication de bière, comprenant les étapes suivantes :
introduction de maische (28) dans un dispositif d'empâtage (1),
évacuation par pompage d'une partie de cette maische, et amenée de cette maische à un dispositif de distribution (8), qui applique la maische, au-dessus de la surface de niveau supérieur (20) de la maische, sur une surface chauffante (13) sur la paroi latérale (3) d'un réservoir (2) du dispositif d'empâtage, de manière telle que la maische s'écoule vers le bas, par-dessus la surface chauffante (13), jusqu'à la surface de niveau supérieur (20) de la maische.

2. Procédé selon la revendication 1, **caractérisé en ce que** la surface chauffante est chauffée à l'aide d'un agent chauffant, qui présente une température de départ qui est plus élevée, de préférence de 10-30K, que la température du produit respective de la maische à échauffer pendant les différentes phases de processus, et/ou la température de départ dans le cas d'un agent chauffant liquide, se situe dans le domaine de la température d'ébullition de l'agent chauffant ou est inférieure à la température d'ébullition.

3. Procédé selon la revendication 1 ou la revendication 2, **caractérisé en ce que** la maische est appliquée sur la surface chauffante (13) dans une zone supérieure, notamment le quart supérieur, du dispositif d'empâtage (1).

4. Procédé selon l'une au moins des revendications 1 à 3, **caractérisé en ce que** la maische est introduite dans le dispositif d'empâtage (1) de préférence par l'intermédiaire du dispositif de distribution.

5. Procédé selon l'une au moins des revendications 1 à 4, **caractérisé en ce que** le dispositif d'empâtage (1) est alimenté en gaz et/ou une dépression est engendrée dans le dispositif d'empâtage.

6. Procédé selon l'une au moins des revendications 1 à 5, **caractérisé en ce que** lors de l'extraction par pompage de ladite partie de maische, la maische est aspirée par pompage dans la zone inférieure du dispositif d'empâtage (1), notamment dans la zone de fond centrale.

7. Procédé selon l'une au moins des revendications 1 - 6, **caractérisé en ce que** la maische est remuée ou agitée dans la zone inférieure du dispositif d'empâtage (1).

8. Installation pour la mise en oeuvre du procédé selon au moins la revendication 1, comprenant un réservoir (2) qui présente une entrée d'alimentation (7) et un écoulement d'évacuation (10),
un système de chauffage (30) sur la paroi latérale (3) du réservoir (2) pour chauffer de la maische (28), et
un dispositif de pompage (12) pour pomper la maische (28) dans un dispositif de distribution (8), installation dans laquelle le dispositif de distribution (8) est conçu et réalisé pour que la maische soit appliquée sur une surface chauffante (13) du système de chauffage, qui s'étend au-dessus de la surface de niveau supérieur (20), et puisse s'écouler de là jusqu'à la surface de niveau supérieur, et
dans laquelle est prévu un dispositif de commande (40), qui pilote l'amenée d'une quantité maximale de maische jusqu'à un niveau de remplissage maximal, la surface chauffante (13) s'étendant au-delà de ce niveau de remplissage maximal au-dessus de celui-ci.

9. Installation selon la revendication 8, **caractérisée en ce que** le dispositif de distribution (8) est agencé dans le quart supérieur du réservoir (2), et est de préférence réalisé sous la forme d'un tube annulaire ou d'une boucle de demi-tube avec des ouvertures (9) ou une fente annulaire (9).

10. Installation selon l'une au moins des revendications 8 ou 9, **caractérisée en ce que** le système de chauffage (30) présente au moins un écoulement de sortie (15a) pour l'agent chauffant dans la zone supérieure du système de chauffage, au moins un écoulement de sortie (15b) dans la zone inférieure du système de chauffage, et au moins une entrée d'alimentation (14) pour l'agent chauffant, qui est agencée dans la zone médiane du système de chauffage (30), l'agent chauffant s'écoulant de préférence verticalement à travers la surface chauffante, d'où résulte un échange de chaleur à contre-courant.

11. Installation selon l'une au moins des revendications 8 à 10, **caractérisée en ce que** la surface chauffante (13) du système de chauffage (30), qui est dirigée vers l'intérieur, présente un grand nombre d'aspérités, notamment un grand nombre de poches bombées (34) agencées côte à côte et les unes au-dessus des autres, qui sont en liaison les unes avec les autres et à travers lesquelles s'écoule l'agent chauffant.

12. Installation selon l'une au moins des revendications 8 à 11, **caractérisée en ce que** la direction d'écoulement de l'agent chauffant à travers ces poches est de préférence prévue de manière telle, qu'à une poche bombée (34) succède une zone de liaison (35), et/ou la direction d'écoulement de l'agent liquide par-dessus les poches bombées, est telle, qu'à une poche bombée (34) succède une zone de liaison (35).

13. Installation selon la revendication 11, **caractérisée en ce que** l'épaisseur d2 de la surface chauffante vaut de 0,4-2 mm.

14. Procédé selon l'une au moins des revendications 1 à 7, **caractérisé en ce que** la maische (28) s'écoule vers le bas, en direction de la surface de niveau supérieur (20) de la maische, dans un interstice (51) entre la surface chauffante (13) et un élément de délimitation (50), notamment une tôle de délimitation.

15. Installation selon l'une au moins des revendications 8 à 13, **caractérisée en ce que** l'installation comprend par ailleurs un élément de délimitation, notamment une tôle de délimitation de forme annulaire, qui est agencé de manière à former entre la surface chauffante (13) et l'élément de délimitation, un interstice (51) à travers lequel s'écoule l'agent liquide en direction de la surface de niveau supérieur (20).

16. Installation selon l'une au moins des revendications 8 à 13 ou 15, **caractérisée en ce que** l'élément de délimitation s'étend d'au moins une zone de hauteur dans laquelle l'agent liquide est appliqué par le dispositif de distribution (8) sur la surface chauffante (13), jusqu'au maximum à une zone qui s'étend au-dessus du fond du réservoir ou fond de cuve (6).

17. Installation selon l'une au moins des revendications 15 ou 16, **caractérisée en ce que** l'interstice (51) est un interstice annulaire et est fermé notamment vers le haut.

18. Installation selon l'une au moins des revendications 8 à 13 et 15 à 17, **caractérisée en ce que** l'élément de délimitation (50) est réalisé en tant que système de chauffage.
